(19) Europäisches Patentamt / European Patent Office / Office européen des brevets

(11) **EP 2 056 562 B1**

(12) **EUROPEAN PATENT SPECIFICATION**

(45) Date of publication and mention
of the grant of the patent:
**07.09.2016  Bulletin 2016/36**

(51) Int Cl.:
*H04L 29/06* (2006.01)　　　*H04L 29/08* (2006.01)

(21) Application number: **07291319.7**

(22) Date of filing: **02.11.2007**

(54) **Resilient service quality in a managed multimedia delivery network**

Elastische Servicequalität in einem verwalteten Multimedia-Liefernetzwerk

Qualité de service élastique dans un réseau de fourniture multimédia géré

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**06.05.2009  Bulletin 2009/19**

(73) Proprietor: **ALCATEL LUCENT
92100 Boulogne-Billancourt (FR)**

(72) Inventors:
  • **Kisel, Andrey
    Maidenhead
    Berkshire SL6 8HD (GB)**
  • **Robinson, David Cecil
    Aldbourne
    Wiltshire SN8 2NP (GB)**
  • **Schutte, Tiaan
    2252 BV  Voorschoten (NL)**

(74) Representative: **Berthier, Karine
    Alcatel-Lucent International
    148/152, route de la Reine
    92100 Boulogne-Billancourt (FR)**

(56) References cited:
**US-A1- 2006 190 615    US-A1- 2006 218 275**

  • **HEFEEDA M M ET AL: "A hybrid architecture for
    cost-effective on-demand media streaming"
    COMPUTER NETWORKS, ELSEVIER SCIENCE
    PUBLISHERS B.V., AMSTERDAM, NL, vol. 44, no.
    3, 20 February 2004 (2004-02-20), pages 353-382,
    XP004483258 ISSN: 1389-1286**

**Description**

The proposed invention relates to methods and systems for providing resilient service quality in a managed multimedia delivery network also known as super peer-to-peer (sP2P) network or caching overlay network.

Traditional (typically closed network) IPTV solutions place content at a centralised library server or ingest life content at a small number of ingest points. A content distribution network (CDN) is later used to distribute the content from the library server to streaming servers close to the network edges. If a user wants to view the content that is not available at the edge streaming server, the request is either served by the library server or rejected.

Open P2P networks, e.g. based on the Internet, are emerging as alternative delivery mechanisms for traditional Internet protocol television (IPTV) services, such as content on-demand (CoD), broadcast TV (bTV), push CoD. Traditional IPTV services have been typically delivered over closed operator provided networks. However, Internet-based sP2P networks cannot provide at present production level quality of service (QoS) for on-demand, real-time multimedia services.

Typical sP2P networks provide caching servers enabling fast access to frequently requested web pages or files. Caching servers (or caching overlays) are common with Internet service providers (ISPs), enabling efficient access to frequently visited web sites. Similarly, multimedia caching servers are being considered to speed up access to frequently requested multimedia assets and reduce the network overload.

However, IPTV services such as CoD, bTV, push CoD require fast and efficient access to the content with quality and bandwidth beyond the requirements of a typical sP2P network used for file sharing or Internet/web access. In particular, quality of service has not only to be considered during the initial session setup, but also be maintained over the duration of the multimedia session, e.g. during on-demand delivery or multimedia distribution for a user's specified 'due time'.

There are two groups of known solutions aiming at improving quality and speed of multimedia asset distribution over the Internet. The first group of solutions improves the speed of non real-time distribution for media and software assets. It uses a traditional caching model, where content is cached in overlay servers providing scalability, but provides only 'best effort' download speed. The second group of solutions started to emerge recently and is directed to deliver IPTV services such as CoD, bTV. One prior art solution is Akamai's EdgeSuite Streaming (AESS). AESS is close to the traditional model of distributed video on-demand (VoD) streaming. Life broadcast or media on-demand content streams are delivered over the Internet to a set of caching edges. The caching edges are located close to the end users and used to serve the requested content. This prior art solution for on-demand service downloads a stream from storage and transfers it reliably to the streaming servers at the edges of the Internet before streaming begins to the user equipment. The AESS solution is an application of the tradition distributed video streaming to the open Internet network. There is no guaranteed quality of service and the best effort approach is used. Moreover, since the stream has to be downloaded to the selected edge server, it cannot guarantee real-time services until the download is, at least partially, completed. Optimisations are applied only at the multimedia delivery initialisation stage - for the selection and transfer of the asset. This prior art solution does not maintain and recover quality of in-progress multimedia sessions or services.

For life broadcast services, the above prior art solution sends multiple copies of the same stream over different routes from an entry point to the edge streaming servers over the Internet. The drawback of the 'multiple copies of the same stream over different routes' solution is that multiple high bandwidth copies consume significant amount of resources, and scaling-up of the system requires exponential infrastructure upgrades.

The US patent application US2006/0190615 describes a peer-to-peer novel video streaming scheme in which each peer stores and streams videos to the requesting client peers. Each video is encoded into multiple descriptions and each description is placed on a different node.

A first common drawback of all known prior art is that optimisation is applied only at the initialisation step for selection and transfer of the assets. There is no described solution for maintaining and recovery of an on-demand multimedia session (service) quality. A second common drawback is that the underlying architecture based upon centralized logic creates both a bottleneck and a single point of failure.

The proposed invention proposes a cost-efficient method to maintain and recover quality of multimedia sessions (service) in a managed public distribution network, e.g. the Internet. The method provides a resilient multimedia service quality over public networks. The suggested approach resolves the above drawbacks of the prior art. The invention allows distributed implementation removing single point of failure and provides cost-efficient scaling.

The invention discloses a method for providing a multimedia service with resilient service quality on a managed multimedia delivery network comprising a plurality of multimedia data caching nodes for caching multimedia data segments. An edge caching node in the network collects the multimedia data segments from a subset of the caching nodes for delivery to a user equipment, e.g. an IPTV set-top box. The edge caching node further monitors the collection of the data segments from the caching nodes and requests data collection information from a service gateway when the collection of data segments is expected to impact the service quality of the multimedia service. For instance, the edge caching node determines whether the speed of collecting data segments falls below a level necessary to maintain the necessary service quality and requests data collection information to recover the service quality if the segment collection speed is not sufficient.

Upon receiving a data collection information request from the edge cache, the service gateway evaluates available resources at the caching nodes for transmitting the requested data segments to the edge caching node in order to determine whether a change of the used caching nodes would improving the service quality. The service gateway responds by sending data collection information that is indicating possible alternative caching nodes for improving the service quality to the edge caching node.

According to one aspect of the invention, distributed 'service quality' logic is introduced by assigning 'quality recovery' initialization onto the client serving edge cache. The edge cache has the ultimate knowledge of the instantaneous and aggregate state of each multimedia service it is responsible for, and as such can trigger an initial 'quality recovery' request, e.g. when the speed of collecting media segments falls below some level. The metric for triggering the recovery request may vary and examples are provided below.

The edge cache is preferably also responsible for setting up the session between the user equipment and the on-demand system. In order to set up a session, the edge cache may contact the service gateway to determine whether there are sufficient resources to maintain the required quality of the session.

According to another aspect of the invention, 'quality recovery' logic and initial service setup logic are combined using a stateless service gateway. For example, upon receiving an on-demand multimedia request from an user equipment, the edge cache contacts the service gateway to request data collection information and determine the best locations of caching nodes for collecting the requested multimedia segments. On the next stage, during the collection, the edge cache periodically checks the status of the session and requests from the service gateway alternative locations if the evaluated quality falls below a benchmark matrix. The service gateway can either recommend (redirect) an alternative service topology (possibly including alternative segment distribution paths) or deny the request. The later is useful when some resources are expected to be freed shortly allowing service quality to improve in time such that the user equipment would not experience overall QoS degradation.

Preferably, the caching nodes send periodically caching state information to a persistent storage, e.g. a centralized state database, which is accessed by the service gateway to obtain the caching state information of the caching nodes when evaluating the available resources at the caching nodes. The service gateway then compiles recommendations for alternative caching nodes for improving the service quality and sends the caching nodes recommendations in response to the data collection information request to the edge cache.

By using the state database, service gateway does not keep the state itself and is stateless: it reads the state from the database. Thus, the gateway is not responsible for updating the state. The gateway just analysis the current state on the distributed system collected from the state database. It can collect the decision logic from the persistent storage (database) as well. For example, let's say the persistent storage is the database. Each cache posts its load and current available multimedia segments to the database (called state of health - SOH). The database may contain logic records - any closest cache with available segment can be selected. Then the gateway, after receiving the initial request, reads SOH data, applies loaded logic and returns the decision to the edge cache.

By delegating 'quality recovery' initiation to the edge cache, the requirement to monitor the instantaneous state of the distributed sP2P network in any given centralized location is removed. A fully distributed system is created where loss of an edge cache will not stop the rest of the system from normal operations.

Further, the suggested solution optimizes overall sP2P resource usage by preventing the edge node from automatic and excessive (e.g. chaotic) switching between caches when service quality temporarily degrades.

And, the suggested solution does not require any centralized monitoring of the instantaneous state of all ongoing multimedia services. That removes a possible bottleneck or single point of failure, and enables efficient scaling up and down of sP2P networks.

According to another aspect, a managed multimedia delivery network for providing a multimedia service with resilient service quality is disclosed. The network comprises a plurality of caching nodes for caching multimedia data segments; an edge caching node for colleting requested multimedia data segments from the caching nodes and for serving a user equipment with the collected multimedia data; and a service gateway for providing cache information to the edge caching node indicating how to obtain the requested multimedia data segments from the caching nodes. The edge caching node comprises a service quality monitoring unit for monitoring the collection of the data segments from the caching nodes and for requesting cache information from the service gateway when the collection of data segments impacts the service quality. The service quality monitoring unit preferably determines whether the speed of arriving data segments is sufficient to pull the end of each segment before it has to be delivered to the user equipment.

Preferably, the service gateway, upon receiving a cache information request, evaluates available resources to transmit the requested data segments to the edge caching node. In response to the cache information request, cache information is sent back to the edge caching node indicating recommended caching nodes for maintaining the service quality.

The service gateway may determine recommended caching nodes for transmitting the requested data segments to the edge caching node based upon at least one of availability of the requested data segments on the caching nodes, load of the caching nodes, available bandwidth for transmitting the requested data segments, and transmission network congestion. Other criteria for determining recommended caching nodes may be used as well. In general, a recommended caching node is expected to improve the service quality by providing allowing a fast collection of the requested data segments. The service gateway may also respond to the cache information request by denying recommending alternative caching nodes if the speed of collecting data segments from the caching nodes that are presently used for the delivery of the multimedia service is going to improve soon.

A network cache information storage for storing cache information of the caching nodes may be provided in the network. The cache information is preferably provided periodically by the caching nodes to the network cache information storage. The service gateway may access the network cache information storage when evaluating available resources for transmitting the requested data segments to the edge caching node.

The present invention provides resilient service quality in managed multimedia distribution networks and enables high quality multimedia on-demand services over public networks, such as the Internet. The invention allows a cost efficient distributed implementation removing a single point of failure. It can be implemented using industry standard protocols, which does not require re-engineering of the existing protocol stacks, thus keeping the implementation cost down.

The present invention defines a network according to claim 1 and a method according to claim 4. Further embodiments are set forth in the dependent claims 2, 3 and 5-7.

The objects and features of the invention will become apparent from the description of preferred embodiments. The present invention is described in the following by referring to exemplary embodiments illustrated schematically in the accompanying figures, wherein

Fig. 1 shows a sP2P network architecture; and
Fig.2 illustrates a managed multimedia distribution network architecture according to an embodiment of the invention.

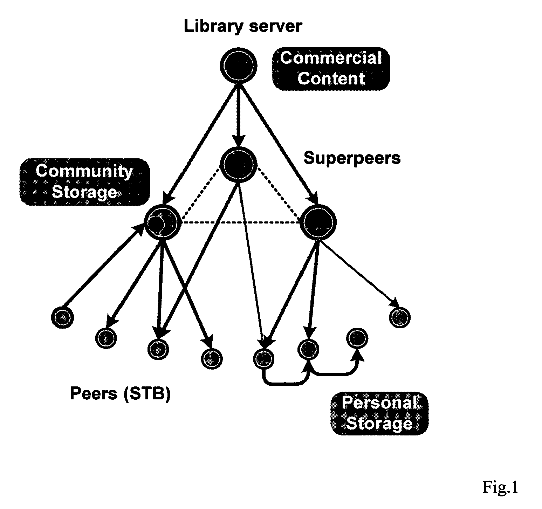

Fig. 1 illustrates a sP2P multimedia distribution network architecture. Multimedia content is placed at a library server and distributed by a CDN to peers, e.g. IPTV set-top boxes (STB), where it can be stored in personal storage of the subscribers. The content is distributed from the library server to streaming servers (superpeers) where it is cached in a community storage.

The superpeers in Fig. 1 are added-value nodes deployed by the network operator with the main goal to cache content frequently access by the users (peers). They improve the quality as an added-value service. The dotted lines between them means that superpeers can exchange cached multimedia data between themselves, they do not need always to contact the library server.

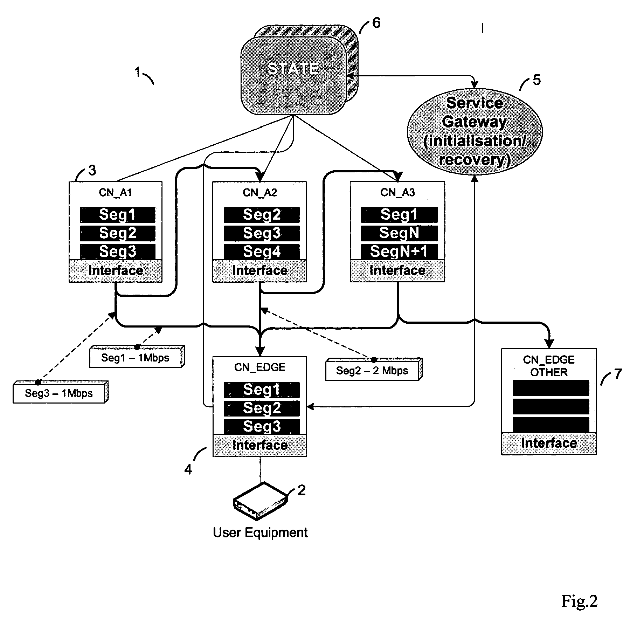

An embodiment of the invention is presented in Fig. 2 which shows schematically a sP2P network 1 (e.g. based on the Internet) comprising several caching nodes 3 (CN _ A1, A2, A3) and an edge caching node 4 (CN_EDGE) serving a user equipment 2 (UE), e.g. an IPTV set-top box (STB). Another edge caching node 7 is shown for illustration purposes. A stateless service gateway 5 used for dual purpose of service initialization and quality recovery is provided. The sP2P network further comprises a persistent storage 6 (e.g. a database) containing the sP2P state.

The initial service setup or initialization logic is explained first. In case the user (via the user equipment) wants to set-up the on-demand multimedia session, the user equipment sends an initiation request to the edge cache. Several scenarios are possible; we take the worst case where the multimedia service is not available at the edge cache. In order to determine whether the required QoS can be achieved and how, the edge cache contacts the service gateway. The service gateway has the knowledge of the caching topology and available assets. The gateway determines whether in principle the edge cache can pull missing multimedia data with the required speed from other caches and how. If so, the session can be initialized. Otherwise, an alternative service may be offered.

Typically, the persistent storage (e.g. the state database) is separate and placed in a different location as the service gateway. The advantage is that multiple service gateways we can deployed close to edges accessing the same SOH data from the state database. The gateways can optionally cache SOH for a shirt while. That means that only the state database has to be highly resilient. The service gateway processes do not need to be resilient and can be restarted many time as they do not keep the caching state. Generally, it's more difficult to make a process (software) resilient then a persistent storage (i.e. the state database). The state database can be centralized or distributed, e.g. using technology like distributed RAC (Real Applications Clusters).

Assuming that the user equipment 2 requests media asset A consisting of three segments

$$Asset\ A = \{Seg_1, Seg_2, Seg_3\},$$

and none of the segments is initially available at the edge caching node 4. The edge caching node 4 then initializes the service by asking the service gateway 5 whether all the segments are available in accessible caching locations with the required on-demand speed. The service gateway 5 checks the state of the sP2P at the state database 6, compiles recommended locations for collecting segments and returns them to the edge caching node 4.

All caching nodes 3 periodically update the persistent storage 6 (i.e. the state database) with the current state. Here, the current state has a broad meaning and may include, but is not limited to, currently cached segments, available and used bandwidth, and other information regarding provided services.

Let's say that that the service gateway 5 recommended the edge caching node 4 to pull *Seg1, Seg3* from caching node CN_A1 and *Seg2* from caching node CN_A2 for on-demand delivery to the user equipment 2. If the edge cache 4 detects that, during a multimedia session, segments are arriving with a service quality below a given quality matrix, it can request 'service recovery' from the service gateway 5 and optionally indicate the reason, for example 'low speed' or 'too many corruptions'.

Fig. 2 shows, e.g., that there is bandwidth to transmit *Seg1* from CN_A1 at 1 Mb/s ("Seg1 - 1Mbps") and similarly *Seg3* at 1 Mb/s ("Seg3 - 1Mbps"). *Seg1* is readily available at CN_A3 as well. *Seg2* is available at CN_A1, and at CN_A2 at 2 Mb/s ("Seg2 - 2Mbps").

For a simple example of a download speed-based quality matrix for initiating a 'quality recovery' request, the edge cache 4 checks whether the average speed of arriving segments is sufficient to pull the end of each segment before it has to be delivered to the user equipment 2. In the present context 'matrix' means that there is a logic for making decision based upon different factors grouped together according to some operator defined rules. However, the present invention is not limited to this example and other quality matrixes using a potentially different metric can be applied as well. An alternative quality matrix may use different factors and rules for mixing them together for the decision.

The service gateway 5 can then analyze the reason for the reduced service quality and either recommend alternative (recovery) cache locations to retrieve remaining segment(s) or segment parts, or deny the request and optionally return the reason for denial.

In one scenario, using the cost matrix from the example above, if the average speed of segment arrival is not sufficient to pull the end of some segments before they have to be delivered to the user equipment 2, the service gateway 5 can deny the request and reply that the speed is expected to improve shortly because some resources will be released (e.g. on caching nodes from where the segment are being pulled) from other activities. The reason in this case can be 'speed will improve'.

In an alternative scenario, the service gateway 5 can analyze the request and the reason for the service quality degradation and recommend alternative cache locations for service quality recovery. For example, if the edge caching node 4 requested recovery because initially selected caching node 3 CN_A1 has too 'low speed' for pulling the segments down, the service gateway 5 can recommend the edge caching node 4 to pull *Seg1* from alternative caching node CN_A3, while continuing pulling *Seg3* from caching node CN_A1 because there is still sufficient time for *Seg3* to arrive (see Fig. 2 for illustration).

A full analysis of all possible communications scenarios between caching nodes and service gateway is outside the scope of this application. The simple example above illustrates how the suggested solution can provide resilient service quality and optimise resource usage.

The suggested solution can optimize sP2P resource usage by preventing the edge cache 4 from automatic and excessive (chaotic) switching between caching nodes 3 when service quality temporarily degrades, which is likely to occur in an open network such as the Internet.

In one scenario, providing there is a high probability that the service quality will improve and the user equipment will not see overall degradation of service, a 'service recovery' request can be denied.

In another scenario, a sufficient safety margin can be included into the 'quality recovery' matrix applied on the edge cache 4 to trigger quality improvement during early signs of degradation. For example, let's say that the edge cache has enough data to serve the next ten minutes of multimedia, but the remaining multimedia data is arriving at less speed then it is consumed by the user. Then, the 10 minutes could be a considered a safety margin. When reached, the edge cache 4 contacts the service gateway 5 for alternative ways (routes) to collect the remaining multimedia. Margins can be expressed in percentage, timing, size, etc. A similar safety margin can be build into the service gateway 5, allowing extra resilient service. For instance, in this case the service gateway can overprovision the resources by some amount. Overprovisioning might be achieved, for example, by nominating extra alternative caches to be used by the edge cache. A prioritisation and/or different safety margins can be applied to different service types, e.g., for differentiation between low and high value assets.

As discussed above, the proposed invention offers a method for cost-efficient resilience of quality in multimedia services over public networks (e.g. the Internet). It is important to notice that the service quality can be efficiently maintained or improved during an active session. The invention allows different service qualities for different service types. The suggested architecture does not use a centralised monitoring logic, thus removing the bottleneck and single point of failure present in other approaches.

Summarizing, the present invention has the following advantages:

- it enables resilient quality multimedia services (CoD, bTV, push CoD, etc) over public Internet;

- it provides a cost efficient solution and does not use a centralized monitoring logic which removes any bottleneck and single point of failure;

- it allows new revenue generation models for Telecom operators in the open Internet networks by providing either overlay networks or service gateways;

- it optimizes resource usage and prevents unnecessary excessive switching between caches;

- it scales up and down cost efficiently as no reconfiguration or downtime for the sP2P network is required; and

- it allows different service qualities for different service types.

The present invention may be implemented in many different ways in hardware and/or software. Embodiments may include network entities such as a caching node, an edge caching node, a service gateway, a sP2P state database and/or user equipment.

## Claims

1.  Managed multimedia delivery network (1) for providing a multimedia service with resilient service quality, comprising:

    a plurality of caching nodes (3) for caching multimedia data segments;
    an edge caching node (4) for colleting requested multimedia data segments from the caching nodes (3) and for serving a user equipment (2) with the collected multimedia data; and
    a service gateway (5) for providing cache information to the edge caching node (4) indicating how to obtain the requested multimedia data segments from the caching nodes (3),

    wherein the edge caching node (4) comprises a service quality monitoring unit for monitoring the collection of the data segments from the caching nodes (3) and for requesting cache information from the service gateway (5) when the collection of data segments impacts the service quality;
    wherein the service gateway (5), upon receiving a cache information request, is adapted to evaluate available resources to transmit the requested data segments to the edge caching node (4) and to respond to the cache information request by denying recommending alternative caching nodes (3) if the speed of collecting data segments from the caching nodes (3) that are presently used for the delivery of the multimedia service is going to improve.

2.  Network of claim 1, comprising a network cache information storage (6) for storing cache information of the caching nodes (3), wherein the service gateway (5) accesses the network cache information storage (6) when evaluating available resources for transmitting the requested data segments to the edge caching node (4).

3.  Network of claim 1, wherein the service quality monitoring unit determines whether the speed of arriving data segments is sufficient to pull the end of each segment before it has to be delivered to the user equipment (2).

4.  Method for providing a multimedia service with resilient service quality on a managed multimedia delivery network (1) comprising a plurality of multimedia data caching nodes (3), the method comprising the steps performed by an edge caching node (4):

    collecting multimedia data segments from a subset of the caching nodes (3) for delivery to a user equipment (2);
    monitoring the collection of the data segments from the caching nodes (3); and
    requesting data collection information from a service gateway (5) when the collection of data segments impacts the service quality of the multimedia service; and the steps performed by the service gateway (5):
    evaluating available resources at the caching nodes (3) for transmitting the requested data segments to the edge caching node (4); and
    providing data collection information to the edge caching node (4) indicating alternative caching nodes (3) for improving the service quality;
    wherein the service gateway (5) responds to the cache information request by denying recommending alternative caching nodes (3) if the speed of collecting data segments from the caching nodes (3) that are presently used for the delivery of the multimedia service is going to improve

5.  Method of claim 4, comprising:

    determining whether the speed of collecting data segments falls below a level necessary to maintain the service quality.

6.  Method of claim 4, comprising:

    requesting data collection information from the service gateway (5) when the multimedia service is initialized.

7. Method of claim 4, comprising:

   periodically sending caching state information from the caching nodes (3) to a centralized state database (6); and
   accessing the centralized state database (6) to obtain the caching state information of the caching nodes (3) by the service gateway (5) when evaluating the available resources at the caching nodes (3) to compile alternative caching nodes (3) for improving the service quality.


**Patentansprüche**

1. Verwaltetes Multimedia-Breitstellungsnetz (1) für das Bereitstellen eines Multimediadienstes mit stabiler Servicequalität, umfassend:

   eine Vielzahl von Zwischenspeicherknoten (3) für das Zwischenspeichern von Multimedia-Datensegmenten;
   einen adjazenten Zwischenspeicherknoten (4) für das Sammeln angeforderter Multimedia-Datensegmente von den Zwischenspeicherknoten (3) und für das Bedienten eines Benutzergeräts (2) mit den gesammelt Multimediadaten; und
   ein Dienstgateway (5) für das Bereitstellen von Zwischenspeicherdaten an den adjazenten Zwischenspeicherknoten (4), welche angeben, wie die angeforderten Multimedia-Datensegmente von den Zwischenspeicherknoten (3) zu erlangen sind,

   wobei der adjazente Zwischenspeicherknoten (4) eine Dienstgüteüberwachungseinheit für das Überwachen der Erfassung der Datensegmente von den Zwischenspeicherknoten (3) und für das Anfordern von zwischengespeicherten Daten von dem Dienstgateway (5) umfasst, wenn die Erfassung von Datensegmenten die Dienstgüte beeinträchtigt;

   wobei das Dienstgateway (5) dafür ausgelegt ist, um auf den Empfang einer Anfrage nach zwischengespeicherten Daten hin verfügbare Ressourcen zwecks Übermittlung der angeforderten Datensegmente an den adjazenten Zwischenspeicherknoten (4) zu evaluieren und auf die Anfrage nach zwischengespeicherten Daten dann mit der Verweigerung des Empfehlens alternativer Zwischenspeicherknoten (3) zu antworten, wenn sich die Geschwindigkeit des Sammelns von Datensegmenten von den gegenwärtig für die Bereitstellung des Multimediadienstes genutzten Zwischenspeicherknoten (3) verbessern wird.

2. Netzwerk nach Anspruch 1, einen Netzwerkspeicher für Zwischenspeicherinformationen (6) zum Speichern von Zwischenspeicherinformationen zu den Zwischenspeicherknoten (3) umfassend, wobei das Dienstgateway (5) dann auf den Netzwerkspeicher für Zwischenspeicherinformationen (6) zugreift, wenn die verfügbaren Ressourcen für das Übermitteln der angeforderten Datensegmente an den adjazenten Zwischenspeicherknoten (4) evaluiert werden.

3. Netzwerk nach Anspruch 1, wobei die Dienstgüteüberwachungseinheit bestimmt, ob die Geschwindigkeit des Eingangs von Datensegmenten ausreichend ist, um das Ende eines jeden Segments einzuholen, ehe es an das Benutzergerät (2) auszuliefern ist.

4. Verfahren für das Bereitstellen eines Multimediadienstes mit stabiler Servicequalität in einem verwalteten Multimedia-Breitstellungsnetz (1), eine Vielzahl von Zwischenspeicherknoten (3) für Multimediadaten umfassend, wobei das Verfahren folgende von einem adjazenten Zwischenspeicherknoten (4) ausgeführten Schritte umfasst:

   das Sammeln von Multimedia-Datensegmenten von einem Untersatz von Zwischenspeicherknoten (3) für ihre Auslieferung an ein Benutzergerät (2);
   das Überwachen der Sammlung von Datensegmenten von den Zwischenspeicherknoten (3); und
   das Anfordern von Informationen zur Datensammlung von einem Dienstgateway (5), wenn die Sammlung von Datensegmenten die Dienstgüte des Multimediadienstes beeinträchtigt; sowie weiterhin die folgenden, von dem Dienstgateway (5) ausgeführten Schritte:

   das Evaluieren verfügbarer Ressourcen an den Zwischenspeicherknoten (3) für die Übermittlung der angeforderten Datensegmente an den adjazenten Zwischenspeicherknoten (4); und
   das Zurverfügungstellen von Informationen zur Datensammlung an den adjazenten Zwischenspeicherknoten (4), wobei besagte Informationen alternative Zwischenspeicherknoten (3) zur Verbesserung der Dienstgüte angeben;
   wobei das Dienstgateway (5) auf die Anfrage nach zwischengespeicherten Daten dann mit der Verweigerung des Empfehlens alternativer Zwischenspeicherknoten (3) antwortet, wenn sich die Geschwindigkeit des Sammelns von Datensegmenten von den gegenwärtig für die Bereitstellung des Multimediadienstes genutzten Zwischenspeicherknoten (3) verbessern wird.

**5.** Verfahren nach Anspruch 4, umfassend:

das Bestimmen, ob die Geschwindigkeit des Sammelns von Datensegmenten unter einen für die Aufrechterhaltung der Dienstgüte erforderlichen Wert sinkt.

**6.** Verfahren nach Anspruch 4, umfassend:

das Anfordern von Informationen zur Datensammlung von dem Dienstgateway (5), wenn der Multimediadienst initialisiert wird.

**7.** Verfahren nach Anspruch 4, umfassend:

das periodische Senden von Zwischenspeicherstatusinformationen von den Zwischenspeicherknoten (3) an eine zentralisierte Statusdatenbank (6); und
das Zugreifen auf die zentralisierte Statusdatenbank (6) zum Abrufen der Zwischenspeicherstatusinformationen zu den Zwischenspeicherknoten (3) durch das Dienstgateway (5), wenn die verfügbaren Ressourcen an den Zwischenspeicherknoten (3) evaluiert werden, um alternative Zwischenspeicherknoten (3) zur Verbesserung der Dienstgüte zusammenzustellen.

**Revendications**

**1.** Réseau géré de prestation multimédia (1) pour une prestation de service multimédia avec une qualité de service résiliente, comprenant :

une pluralité de noeuds de mise en antémémoire (3) pour la mise en antémémoire de segments de données multimédia ;
un noeud de mise en antémémoire de frontière (4) pour le recueil de segments de données multimédia demandés à partir des noeuds de mise en antémémoire (3) et pour la desserte d'un équipement d'utilisateur (2) avec les données multimédia recueillies ; et
une passerelle de service (5) pour la fourniture d'informations de mise en antémémoire au noeud de mise en antémémoire de frontière (4) indiquant la manière pour obtenir les segments de données multimédias demandés à partir des noeuds de mise en antémémoire (3),
dans lequel le noeud de mise en antémémoire de frontière (4) comprend une unité de surveillance de qualité de service pour la surveillance du recueil des segments de données à partir des noeuds de mise en antémémoire (3) et pour la demande d'informations de mise en antémémoire à partir de la passerelle de service (5) lorsque le recueil de segments de données a une incidence sur la qualité de service ;
dans lequel la passerelle de service (5) est conçue, après la réception d'une demande d'informations de mise en antémémoire, pour l'évaluation des ressources disponibles pour la transmission des segments de données demandés au noeud de mise en antémémoire de frontière (4) et pour la réponse à la demande d'informations de mise en antémémoire par un refus de recommandation de noeuds de mise en antémémoire (3) alternatifs si la vitesse de recueil de segments de données à partir des noeuds de mise en antémémoire (3) en cours d'utilisation pour la prestation du service multimédia va s'améliorer.

**2.** Réseau selon la revendication 1, comprenant un dispositif de mémorisation d'informations de mise en antémémoire de réseau (6) pour la mémorisation d'informations de mis en antémémoire des noeuds de mise en antémémoire (3), la passerelle de service (5) accédant au dispositif de mémorisation d'informations de mise en antémémoire de réseau (6) au moment de l'évaluation des ressources disponibles pour la transmission des segments de données demandés au noeud de mise en antémémoire de frontière (4).

**3.** Réseau selon la revendication 1, l'unité de surveillance de qualité de service déterminant si la vitesse d'arrivée des segments de données est suffisante pour mener à terme chaque segment avant que ledit segment ne doive être livré à l'équipement d'utilisateur (2).

**4.** Procédé pour la prestation d'un service multimédia avec une qualité de service résiliente sur un réseau géré de prestation multimédia (1) comprenant une pluralité de noeuds de mise en antémémoire (3) de données multimédia, le procédé comprenant les étapes suivantes exécutées par un noeud de mise en antémémoire de frontière (4) :

recueil de segments de données multimédia à partir d'un sous-ensemble des noeuds de mise en antémémoire (3) pour la livraison à un équipement d'utilisateur (2) ;
surveillance du recueil des segments de données à partir des noeuds de mise en antémémoire (3) ; et
demande d'informations de recueil de données à partir d'une passerelle de service (5) lorsque le recueil de segments de données a une incidence sur la qualité de service du service multimédia ; et les étapes suivantes exécutées par la passerelle de service (5):

évaluation des ressources disponibles au niveau des noeuds de mise en antémémoire (3) pour la transmission des segments de données demandés au noeud de mise en antémémoire de frontière (4) ; et fourniture d'informations de recueil de données au noeud de mise en antémémoire de frontière (4) indiquant des noeuds de mise en antémémoire (3) alternatifs pour l'amélioration de la qualité de service ; la passerelle de service (5) répondant à la demande d'informations de mise en antémémoire par un refus de recommandation de noeuds de mise en antémémoire (3) alternatifs si la vitesse de recueil de segments de données à partir des noeuds de mise en antémémoire (3) en cours d'utilisation pour la prestation du service multimédia va s'améliorer

5. Procédé selon la revendication 4, comprenant de :

déterminer si la vitesse de recueil de segments de données tombe sous un niveau nécessaire pour le maintien de la qualité de service.

6. Procédé selon la revendication 4, comprenant :

la demande d'informations de recueil de données à partir de la passerelle de service (5) lorsque le service multimédia est lancé.

7. Procédé selon la revendication 4, comprenant :

l'envoi périodique d'informations d'état de mise en antémémoire à partir des noeuds de mise en antémémoire (3) à une base de données d'état centralisée (6) ; et l'accès à la base de données d'état centralisée (6) afin d'obtenir des informations d'état de mise en antémémoire des noeuds de mise en antémémoire (3) par la passerelle de service (5) au moment de l'évaluation des ressources disponibles au niveau des noeuds de mise en antémémoire (3) afin de compiler des noeuds de mise en antémémoire (3) alternatifs pour l'amélioration de la qualité de service.

EP 2 056 562 B1

Fig.1

10

Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060190615 A